# EUROPÄISCHE PATENTSCHRIFT

(11) **EP 1 100 709 B1**
(45) Veröffentlichungstag und Bekanntmachung des Hinweises auf die Patenterteilung: **25.09.2002**
(21) Anmeldenummer: 99940021.1
(22) Anmeldetag: 17.07.1999
(51) Int. Cl.: B62D 5/083

(54) **DREHSCHIEBERVENTIL FÜR HILFSKRAFTLENKUNGEN VON KRAFTFAHRZEUGEN**
ROTARY SHIFT VALVE FOR SERVO-ASSISTED STEERING SYSTEMS OF MOTOR VEHICLES
DISTRIBUTEUR ROTATIF POUR DIRECTIONS ASSISTEES D'AUTOMOBILES

(30) Priorität: 24.07.1998 DE 19833438
(43) Veröffentlichungstag der Anmeldung: 23.05.2001
(73) Patentinhaber: ZF Lenksysteme GmbH, 73522 Schwäbisch Gmünd (DE)
(72) Erfinder: HAFERMALZ, Jens-Uwe, D-73550 Waldstetten (DE); ERTLE, Peter, D-73568 Durlangen (DE); URBAN, Karl-Heinz, D-73565 Spraitbach (DE)
(86) Internationale Anmeldenummer: EP9905120
(87) Internationale Veröffentlichungsnummer: WO00005125

(56) Entgegenhaltungen:
- WO-A-87/04678
- WO-A-94/00329
- DE-B- 1 101 186

## Beschreibung

Die Erfindung betrifft ein Drehschieberventil für Hilfskraftlenkungen von Kraftfahrzeugen nach dem Oberbegriff des Anspruches 1 bzw. ein Drehschieberventil für Hilfskraftlenkungen von Kraftfahrzeugen nach dem Oberbegriff des Anspruches 3.

Das Drehschieberventil enthält zwei Ventilelemente, die koaxial ineinander beweglich angeordnet und zum Erzielen eines Steuerweges begrenzt zueinander verdrehbar angeordnet sind. Ein erstes Ventilelement, das mit einem Ventil-Eingangsglied drehfest verbunden ist, ist mit einem Ventil-Ausgangsglied über eine Drehstabfeder und über eine mechanische Mitnahme in der Form einer Totgangkupplung verbunden. Ein zweites Ventilelement ist mit einem Ventil-Ausgangsglied drehfest verbunden. Das radial außenliegende Ventilelement weist innenliegende und das radial innenliegende Ventilelement weist außenliegende Steuer-Längsnuten auf, die miteinander zur Steuerung eines Druckmittels zu und von zwei Arbeitsräumen eines Servomotors und zu einem Rücklaufanschluß für einen Druckmittelbehälter zusammenwirken.

Ein solches Drehschieberventil ist beispielsweise bekannt aus dem DE-Patent 1 913 837. Bei diesem Drehschieberventil erfolgt der Rücklauf des Druckmittels zu dem Druckmittelbehälter direkt aus den Rücklaufnuten zu einem Rücklaufanschluß. Dazu sind die Rücklaufnuten nach einer Seite hin offen. Dies ergibt zwischen den beiden Ventilelementen eine am Umfang unterbrochene Lagerstelle mit den bekannten Nachteilen. Ein solches Ventil kann zum Verklemmen neigen, was wiederum zu unerwünschten Geräuschen und einem unguten Lenkgefühl führen kann.

Ein weiteres Drehschieberventil ist bekannt aus der EP 0 171 247 B1. Bei diesem Drehschieberventil sind die Rücklaufnuten in ihrer axialen Länge nach beiden Seiten geschlossen. Der Rücklauf von den Rücklaufnuten zu dem Rücklaufanschluß erfolgt durch einen Innenraum in dem radial innenliegenden Ventilelement und über eine Schrägbohrung des radial innenliegenden Ventilelementes. Derartige Schrägbohrungen lassen sich nur kompliziert und teuer herstellen. Bei diesem Drehschieberventil ist das radial innenliegende Ventilelement auf der Drehstabfeder durch ein Gleitlager gelagert.

Ein als nächstliegender Stand der Technik zu betrachtendes Drehschieberventil ist aus der WO 87/04678 bekannt. Das Drehschieberventil weist einen Drehschieber, eine den Drehschieber umgebende Steuerbuchse und eine Arbeitswelle, die mit dem Ritzel verbunden sein kann, welches mit der Zahnstange korrespondiert, auf. Ein von einer Pumpe geförderter Druckmittelstrom wird in einer Ringnut des diese genannten Teile umgebenden Ventilgehäuses eingeleitet. Von dort aus erfolgt die Verteilung des Druckmittelstroms nach Lage der Steuernuten, Steuerkanten und Steuerbohrungen in dem Drehschieber und der Steuerbuchse entsprechend in Hydraulikleitungen, die zu einem Arbeitszylinder führen. Für den Rücklauf des Druckmittels dient eine Rücklaufleitung, die über einen Spalt zwischen der Innenwand des Lagerteils und dem Drehstab beaufschlagt wird.

Der vorliegenden Erfindung liegt die Aufgabe zugrunde, ein Drehschieberventil darzustellen, das einfach und kostengünstig herzustellen ist. Außerdem soll der Rücklauf ohne wesentliche Druckverluste erfolgen und das Ventil möglichst reibungsarm und klemmfrei betätigt werden können.

Diese Aufgabe wird durch das im Anspruch 1 bzw. das im Anspruch 3 gekennzeichnete Drehschieberventil gelöst. Die Lösung erfolgt dadurch, daß bei einem gattungsgemäßen Drehschieberventil der Rücklauf aus den den Rücklauf steuernden Steuer-Längsnuten des radial innenliegenden Ventilelementes zu dem Rücklaufanschluß durch ein Wälzlager erfolgt.

Vorteilhafte und zweckmäßige Ausgestaltungen der Erfindung sind in den Unteransprüchen angegeben.

Bei einem ersten Ausführungsbeispiel ist das Wälzlager eines der Wälzlager, mit denen das eine Ventilelement in dem anderen Ventilelement gelagert ist.

Bei einem zweiten Ausführungsbeispiel sind die den Rücklaufanschluß steuernden Steuer-Längsnuten des radial innenliegenden Ventilelementes mit einem Innenraum des radial innenliegenden Ventilelementes verbunden und die Drehstabfeder ist in dem Innenraum des radial innenliegenden Ventilelementes über ein Wälzlager gelagert. Der Rücklauf aus dem Innenraum des radial innenliegenden Ventilelementes zu dem Rücklaufanschluß erfolgt durch das Wälzlager und durch die Totgangkupplung. Wird das Wälzlager als Nadellager ausgeführt, so kann dieses Lager mit einem Nadelkäfig ausgestattet sein, der einen strömungsgünstigen Querschnitt aufweist und mit Durchströmöffnungen versehen ist, die ein Durchströmen des rücklaufenden Druckmittels ohne wesentlichen Druckabfall zulassen. Außerdem kann ein solches Lager unter Vorspannung montiert werden, wodurch eine spielfreie Lagerung des innenliegenden Ventilelementes bei gleichzeitiger günstiger Rollreibung erreicht wird. Dadurch wird auch ein Klemmen des Ventils und das Entstehen von damit verbundenen Geräuschen und Drehmomentsprüngen verhindert.

Wenn die den Rücklaufanschluß steuernden Steuer-Längsnuten des radial innenliegenden Ventilelementes mit einem Innenraum des radial innenliegenden Ventilelementes verbunden sind, dann wird die Drehstabfeder in dem Innenraum des radial innenliegenden Ventilelementes über ein Wälzlager gelagert ist und der Rücklauf aus dem Innenraum des radial innenliegenden Ventilelementes zu dem Rücklaufanschluß erfolgt durch das Wälzlager und durch die Totgangkupplung.

Im folgenden wird die Erfindung anhand zweier in der Zeichnung dargestellter Ausführungsbeispiele näher erläutert.
Es zeigen:

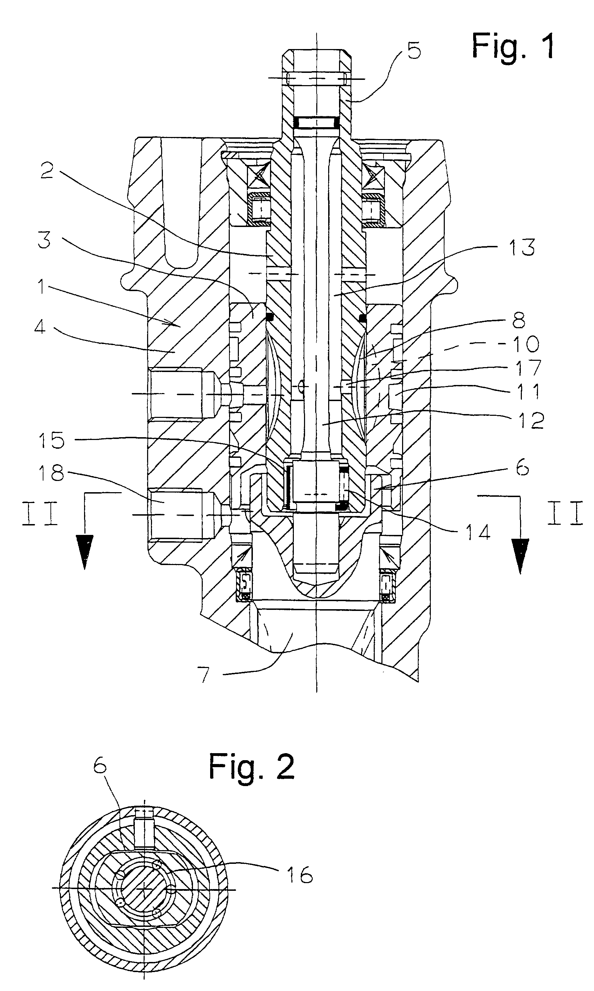

- Fig. 1: einen Längsschnitt durch das erfindungsgemäße Drehschieberventil am Beispiel einer Zahnstangen-Hilfskraftlenkung;
- Fig. 2: einen Querschnitt durch das erfindungsgemäße Drehschieberventil gemäß der Linie II-II in Fig. 1 und
- Fig. 3: einen Längsschnitt durch das erfindungsgemäße Drehschieberventil in einem zweiten Ausführungsbeispiel.

Das erfindungsgemäße Drehschieberventil 1 enthält ein erstes Ventilelement in der Form eines Drehschiebers 2 und ein zweites Ventilelement, das als Steuerbuchse 3 ausgebildet ist. Die beiden Ventilelemente sind in einem Ventilgehäuse 4 koaxial ineinander beweglich angeordnet. Dabei ist der Drehschieber 2 das radial innenliegende Ventilelement, die Steuerbuchse 3 ist das radial außenliegende Ventilelement. Mit gleicher Wirkung können die beiden Ventilelemente vertauscht sein, so daß der Drehschieber 2 das radial außenliegende Ventilelement ist und die Steuerbuchse 3 das radial innenliegende Ventilelement. Der Drehschieber 2 ist mit einem Ventil-Eingangsglied 5 drehfest verbunden, welches als Lenkspindelanschluß ausgebildet ist. Der Lenkspindelanschluß ist beispielsweise mit einer nicht dargestellten Lenkspindel, die ein Lenkhandrad trägt, über ein ebenfalls nicht dargestelltes Kreuzgelenk verbunden. Der Drehschieber 2 ist außerdem über eine mechanische Verbindung in der Form einer Totgangkupplung 6 mit einem Ventil-Ausgangsglied 7 verbunden. Das Ventil-Ausgangsglied 7 kann als Antriebsritzel oder als Kugelgewindespindel ausgebildet sein, abhängig von der Verwendung des Drehschieberventils bei Zahnstangen- oder Kugelmutter-Hilfskraftlenkungen.

An der äußeren Mantelfläche des Drehschiebers 2 sind Steuer-Längsnuten 8 angeordnet, die mit Steuer-Längsnuten 10 im Inneren der Steuerbuchse 3 zusammenwirken. Das Drehschieberventil 1 stellt, je nach Drehrichtung, eine Druckmittelverbindung über die Steuer-Längsnuten 8 und 10 sowie über Ringnuten 11 in der Steuerbuchse 3 zu einem nicht dargestellten Servomotor dar. Das Ventil-Eingangsglied 5 ist zudem über eine Drehstabfeder 12 mit dem Ventil-Ausgangsglied 7 verbunden.

Im Inneren des Drehschiebers 2 befindet sich ein Innenraum 13, in dem die Drehstabfeder 12 in der Nähe ihres mit dem Ventilausgangsglied 7 drehfest verbundenen Endes über ein Wälzlager 14 gelagert ist. Das Wälzlager 14 ist zweckmäßigerweise als Nadellager ausgebildet, dessen Nadelkäfig einen strömungsgünstigen Querschnitt und relativ große Durchströmöffnungen 16 aufweist. Dadurch kann das Nadellager ohne wesentlichen Druckabfall durchströmt werden.

Durch ein solches Nadellager wird es möglich, das von dem nicht dargestellten Servomotor zurückfließende Druckmittel aus den Steuer-Längsnuten 8 über eine Radialbohrung 17 in dem Drehschieber 2 über den Innenraum 13, durch die Durchströmöffnungen 16 des Wälzlagers 14 und über die durchströmbaren Räume der Totgangkupplung 6 zu einem Rücklaufanschluß 18 zu führen.

Durch die sehr günstige Ölführung durch das Wälzlager wird ein sehr steifer Ventilaufbau erreicht. Damit werden die Stick-Slip-Effekte zwischen der Steuerbuchse und dem Drehschieber reduziert. Außerdem kann der Vorteil der Wälzlagerung genutzt werden. Dieser Vorteil ist durch die spielfreie Lagerung des Drehschiebers gekennzeichnet bei gleichzeitiger Querkraftunempfindlichkeit. Das Geräuschverhalten, der Selbstlenkeffekt und die Klemmneigung des Ventils werden reduziert.

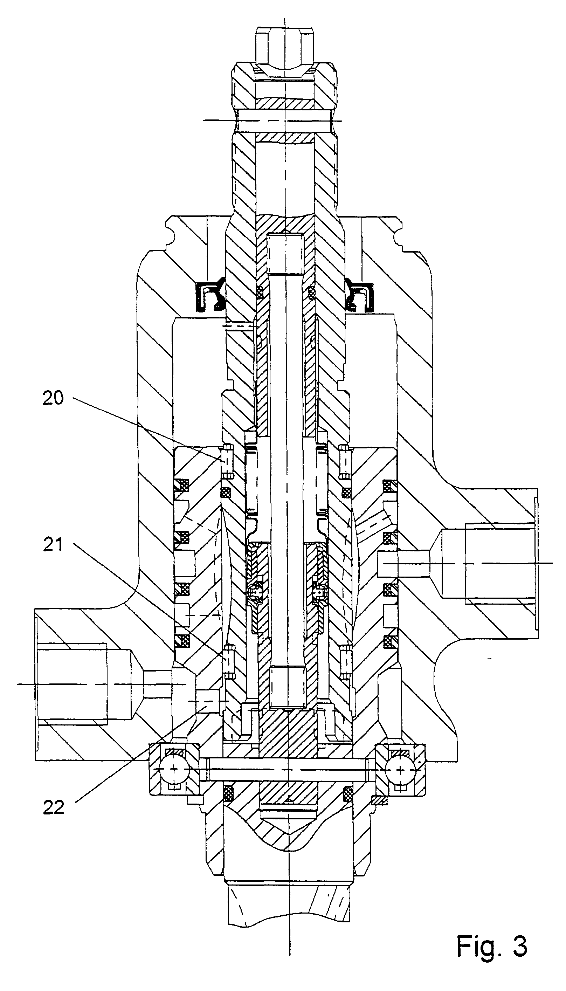

Diese Vorteile werden auch bei dem Ausführungsbeispiel nach Fig. 3 genutzt. Hierbei ist der Drehschieber 2 in der Steuerbuchse 3 über zwei Wälzlager 20, 21 in der Form zweier Nadellager gelagert. Der Rücklauf aus den Steuer-Längsnuten 8 des radial innenliegenden Ventilelementes, die den Rücklauf steuern, zu dem Rücklaufanschluß 18 erfolgt durch das eine Wälzlager 21 und durch eine in der Steuerbuchse 3 angeordnete Bohrung 22.

### Bezugszeichen

- 1: Drehschieberventil
- 2: Drehschieber
- 3: Steuerbuchse
- 4: Ventilgehäuse
- 5: Ventil-Eingangsglied
- 6: Totgangkupplung
- 7: Ventil-Ausgangsglied
- 8: Steuer-Längsnut (Drehschieber)
- 9: -
- 10: Steuer-Längsnut (Steuerbuchse)
- 11: Ringnut
- 12: Drehstabfeder
- 13: Innenraum
- 14: Wälzlager
- 15: Nadelkäfig
- 16: Durchströmöffnung
- 17: Radialbohrung
- 18: Rücklaufanschluß
- 19: -
- 20: Wälzlager
- 21: Wälzlager
- 22: Bohrung

## Patentansprüche

1. Drehschieberventil (1) für Hilfskraftlenkungen von Kraftfahrzeugen, mit einem ersten Ventilelement, das mit einem Ventil-Eingangsglied (5) drehfest verbunden ist, mit einem zweiten Ventilelement, das mit einem Ventil-Ausgangsglied (7) drehfest verbunden ist, und mit folgenden weiteren Merkmalen:
- das erste Ventilelement ist mit dem Ventil-Ausgangsglied (7) über eine Drehstabfeder (12) und über eine mechanische Mitnahme in der Form einer Totgangkupplung (6) verbunden,
- die beiden Ventilelemente sind in einem Ventilgehäuse (4) koaxial ineinander beweglich angeordnet und maximal um den Verdrehweg der Totgangkupplung (6) relativ zueinander verdrehbar,
- das radial außenliegende Ventilelement weist innenliegende und das radial innenliegende Ventilelement weist außenliegende Steuer-Längsnuten (8, 10) auf, die miteinander zur Steuerung eines Druckmittels zu und von zwei Arbeitsräumen eines Servomotors und zu einem Rücklaufanschluß (18) für einen Druckmittelbehälter zusammenwirken,
**dadurch gekennzeichnet, daß** der Rücklauf aus den den Rücklauf steuernden Steuer-Längsnuten (8) des radial innenliegenden Ventilelementes zu dem Rücklaufanschluß (18) durch ein Wälzlager (14, 21) erfolgt.

2. Drehschieberventil nach Anspruch 1, **dadurch gekennzeichnet, daß** das Wälzlager (21) eines der Wälzlager (20, 21) ist, mit denen das eine Ventilelement in dem anderen Ventilelement gelagert ist.

3. Drehschieberventil nach Anspruch 1, wobei die den Rücklaufanschluß (18) steuernden Steuer-Längsnuten (8) des radial innenliegenden Ventilelementes mit einem Innenraum (13) des radial innenliegenden Ventilelementes verbunden sind, **dadurch gekennzeichnet, daß** die Drehstabfeder (12) in dem Innenraum (13) des radial innenliegenden Ventilelementes über ein Wälzlager (14) gelagert ist und daß der Rücklauf aus dem Innenraum (13) des radial innenliegenden Ventilelementes zu dem Rücklaufanschluß (18) durch das Wälzlager (14) und durch die Totgangkupplung (6) erfolgt.

4. Drehschieberventil nach einem der Ansprüche 1 bis 3, **dadurch gekennzeichnet, daß** das Wälzlager (14, 21) ein Nadellager ist.

5. Drehschieberventil nach Anspruch 4, **dadurch gekennzeichnet, daß** das Nadellager einen Nadelkäfig (15) aufweist mit einem strömungsgünstigen Querschnitt und mit Durchströmöffnungen (16), die ein Durchströmen des rücklaufenden Druckmittels ohne wesentlichen Druckabfall zulassen.

## Claims

1. Rotary slide valve (1) for power-assisted steering systems of motor vehicles, with a first valve element which is connected fixedly in terms of rotation to a valve input member (5), with a second valve element which is connected fixedly in terms of rotation to a valve output member (7), and with the following further features:
- the first valve element is connected to the valve output member (7) via a torsion bar spring (12) and via a mechanical take-up in the form of a backlash coupling (6),
- the two valve elements are arranged in a valve housing (4) so as to be moveable coaxially one in the other and are rotatable relative to one another at most by the amount of the rotary travel of the backlash coupling (6),
- the radially outer valve element has inner and the radially inner valve element has outer longitudinal control grooves (8, 10) which interact with one another to control a pressure medium to and from two working spaces of a servomotor and to a return connection (18) for a pressure-medium reservoir,
**characterized in that** the return from the longitudinal control grooves (8) of the radially inner valve element which control the return to the return connection (18) takes place through a rolling bearing (14, 21).

2. Rotary slide valve according to Claim 1, **characterized in that** the rolling bearing (21) is one of the rolling bearings (20, 21) by means of which one valve element is mounted in the other valve element.

3. Rotary slide valve according to Claim 1, the longitudinal control grooves (8) of the radially inner valve element which control the return connection (18) being connected to an inner space (13) of the radially inner valve element, **characterized in that** the torsion bar spring (12) is mounted in the inner space (13) of the radially inner valve element via a rolling bearing (14), and **in that** the return from the inner space (13) of the radially inner valve element to the return connection (18) takes place through the rolling bearing (14) and through the backlash coupling (6).

4. Rotary slide valve according to one of Claims 1 to 3, **characterized in that** the rolling bearing (14, 21) is a needle bearing.

5. Rotary slide valve according to Claim 4, **characterized in that** the needle bearing has a needle cage (15) with a streamlined cross section and with throughflow orifices (16) which allow the returning pressure medium to flow through without any appreciable pressure drop.

## Revendications

1. Vanne de distribution rotative (1) pour directions assistées de véhicules automobiles, comprenant un premier élément de vanne qui est connecté fixe en rotation à un organe d'entrée de vanne (5), un deuxième élément de vanne qui est connecté fixe en rotation à un organe de sortie de vanne (7) et ayant les caractéristiques supplémentaires suivantes :
- le premier élément de vanne est connecté à l'organe de sortie de vanne (7) par le biais d'un ressort à barre de torsion (12) et par le biais d'un élément d'entraînement mécanique en forme d'accouplement à course morte (6),
- les deux éléments de vanne sont disposés de manière à se déplacer coaxialement l'un dans l'autre dans un boîtier de vanne (4) et peuvent être tournés relativement l'un à l'autre au maximum de la distance de rotation de l'accouplement à course morte (6),
- l'élément de vanne radialement externe présente des rainures longitudinales de commande intérieures et l'élément de vanne radialement interne présente des rainures longitudinales de commande extérieures (8, 10), lesquelles coopèrent les unes avec les autres pour commander un fluide sous pression vers et depuis deux chambres de travail d'un servomoteur et vers un raccord de retour (18) pour un récipient de fluide sous pression,
**caractérisée en ce que** le retour depuis les rainures longitudinales de commande (8) commandant le retour, de l'élément de vanne radialement interne, jusqu'au raccord de retour (18) s'effectue par un palier à roulement (14, 21).

2. Vanne de distribution rotative selon la revendication 1, **caractérisée en ce que** le palier à roulement (21) est l'un des paliers à roulement (20, 21) avec lesquels l'un des éléments de vanne est monté dans l'autre élément de vanne.

3. Vanne de distribution rotative selon la revendication 1, dans laquelle les rainures longitudinales de commande (8) commandant le raccord de retour (18), de l'élément de vanne radialement interne, sont connectées à une chambre interne (13) de l'élément de vanne radialement interne, **caractérisée en ce que** le ressort à barre de torsion (12) est monté dans la chambre interne (13) de l'élément de vanne radialement interne par l'intermédiaire d'un palier à roulement (14), et **en ce que** le retour depuis la chambre interne (13) de l'élément de vanne radialement interne jusqu'au raccord de retour (18) s'effectue par le palier à roulement (14) et par l'accouplement à course morte (6).

4. Vanne de distribution rotative selon l'une quelconque des revendications 1 à 3, **caractérisée en ce que** le palier à roulement (14, 21) est un palier à aiguilles.

5. Vanne de distribution rotative selon la revendication 4, **caractérisée en ce que** le palier à aiguilles présente une cage de palier à aiguilles (15) avec une section transversale favorable à l'écoulement, et avec des ouvertures de passage (16) qui autorisent un passage du fluide sous pression de retour sans chute de pression notoire.
